# EUROPÄISCHE PATENTSCHRIFT

(11) **EP 2 975 289 B1**
(45) Veröffentlichungstag und Bekanntmachung des Hinweises auf die Patenterteilung: **07.09.2022**
(21) Anmeldenummer: 15174723.5
(22) Anmeldetag: 01.07.2015
(51) Int. Cl.: F16F 15/067, F16F 1/04, F16F 1/12, F24C 15/10

(54) **KOCHFELDVORRICHTUNG**
HOTPLATE DEVICE
PLAQUE DE CUISSON

(30) Priorität: 04.07.2014 ES 201431011
(43) Veröffentlichungstag der Anmeldung: 20.01.2016
(73) Patentinhaber: BSH Hausgeräte GmbH, 81739 München (DE)
(72) Erfinder: Ceamanos Gaya, Jesús, 50016 Zaragoza (ES); Lapetra Campos, Isaac, 50003 Zaragoza (ES); Martin Gomez, Damaso, 20012 Zaragoza (ES); Valencia Betran, María, 50010 Zaragoza (ES)

(56) Entgegenhaltungen:
- EP-A1- 1 579 731
- EP-A1- 1 734 308
- EP-A1- 1 784 052
- CN-A- 102 954 506
- CN-U- 203 657 011
- ES-A1- 2 328 540
- US-A1- 2010 044 367

## Beschreibung

Die Erfindung geht aus von einer Kochfeldvorrichtung nach dem Oberbegriff des Anspruchs 1.

Aus dem Stand der Technik sind Induktionskochfelder bekannt, die eine Kochfeldplatte sowie ein federelastisches Element aufweisen, welches dazu vorgesehen ist, einen Induktor, insbesondere mittelbar, gegen eine Kochfeldplatte zu pressen.

Aus der CN 203657011 U ist ein Kochfeld mit einer Anpresseinheit für eine Heizeinheit bekannt, wobei die Anpresseinheit eine Feder und eine Hülseneinheit aufweist.

Die Aufgabe der Erfindung besteht insbesondere darin, eine gattungsgemäße Kochfeldvorrichtung mit verbesserten Eigenschaften hinsichtlich einer Anpressung bereitzustellen. Die Aufgabe wird durch die kennzeichnenden Merkmale des Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung, insbesondere einer Induktionskochfeldvorrichtung, mit zumindest einer Anpresseinheit, welche zumindest ein elastisches Element aufweist und welche dazu vorgesehen ist, zumindest eine Heizeinheit, insbesondere mittelbar, gegen eine Kochfeldplatte zu pressen.

Es wird vorgeschlagen, dass die zumindest eine Anpresseinheit zumindest eine Hülseneinheit aufweist, welche das zumindest eine elastische Element in einem montierten Zustand zu wenigstens einem Großteil und vorzugsweise vollständig umschließt und/oder umgreift.

Unter einer "Kochfeldvorrichtung" soll in diesem Zusammenhang insbesondere zumindest ein Teil, insbesondere eine Unterbaugruppe, eines Kochfelds, vorzugsweise eines Induktionskochfeldes, verstanden werden. Insbesondere kann die Kochfeldvorrichtung auch das gesamte Kochfeld, vorzugsweise das gesamte Induktionskochfeld, umfassen. Insbesondere kann die Kochfeldvorrichtung die zumindest eine Heizeinheit und/oder die Kochfeldplatte aufweisen, welche vorzugsweise zumindest teilweise, vorzugsweise zu wenigstens einem Großteil und besonders bevorzugt vollständig aus Glas und/oder Glaskeramik besteht. Unter dem Ausdruck "zu wenigstens einem Großteil" soll insbesondere zu zumindest 70 %, vorteilhaft zu zumindest 80 %, vorzugsweise zu zumindest 90 % und besonders bevorzugt zu zumindest 95 % verstanden werden. Die zumindest eine Heizeinheit kann insbesondere als Induktionsheizeinheit ausgebildet sein und insbesondere zumindest ein Heizelement, vorzugsweise einen Induktor, und insbesondere zumindest ein Trägerelement aufweisen, das insbesondere dazu vorgesehen ist, das zumindest eine Heizelement zu halten und/oder zu tragen. Das zumindest eine Trägerelement kann dabei aus einem beliebigen einem Fachmann als sinnvoll erscheinenden Material bestehen, wie beispielweise zumindest teilweise, vorzugsweise zu wenigstens einem Großteil und besonders bevorzugt vollständig aus Kunststoff, einem Verbundwerkstoff und/oder einem Metall, insbesondere Stahl, Edelstahl und/oder Aluminium. In diesem Zusammenhang soll unter einem "Heizelement" insbesondere ein Element verstanden werden, welches dazu vorgesehen ist, Energie, vorzugsweise elektrische Energie, in Wärme umzuwandeln und insbesondere einem Gargeschirr zuzuführen. Vorzugsweise ist das zumindest eine Heizelement dabei dazu vorgesehen, ein elektromagnetisches Wechselfeld, insbesondere mit einer Frequenz zwischen 20 kHz und 100 kHz, zu erzeugen, das insbesondere dazu vorgesehen ist, in einem aufgestellten, insbesondere metallischen, vorzugsweise ferromagnetischen, Gargeschirrboden durch Wirbelstrominduktion und/oder Ummagnetisierungseffekte in Wärme umgewandelt zu werden. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Ferner kann die Kochfeldvorrichtung zumindest eine, vorzugsweise einstückige, Halteeinheit umfassen, welche insbesondere zumindest in einem montierten Zustand, vorzugsweise in dem montierten Zustand, dazu vorgesehen ist, die zumindest eine Heizeinheit, insbesondere das zumindest eine Heizelement und/oder das zumindest eine Trägerelement, vorteilhaft zumindest zwei, vorzugsweise zumindest drei und besonders bevorzugt zumindest vier Heizeinheiten und/oder eine Heizmatrix, welche insbesondere zumindest 4×2-Heizelemente, vorzugsweise zumindest 4×4-Heizelemente und besonders bevorzugt zumindest 8×8-Heizelemente umfasst, zumindest teilweise, vorzugsweise zu wenigstens einem Großteil, zu halten, zu stützen und/oder gegen die zumindest eine Kochfeldplatte zu pressen. In diesem Fall kann die zumindest eine Anpresseinheit insbesondere dazu vorgesehen sein, die zumindest eine Heizeinheit mittelbar gegen die zumindest eine Kochfeldplatte zu pressen. Insbesondere weist die zumindest eine Anpresseinheit in diesem Fall zumindest eine Kontaktfläche mit der zumindest einen Halteeinheit auf. Vorzugsweise ist die zumindest eine Halteeinheit dabei als Halteplatte ausgebildet. Die zumindest eine Halteeinheit kann insbesondere aus einem beliebigen einem Fachmann als sinnvoll erscheinenden Material bestehen, wie beispielweise zumindest teilweise, vorzugsweise zu wenigstens einem Großteil und besonders bevorzugt vollständig, aus Kunststoff, einem Verbundwerkstoff und/oder einem Metall, insbesondere Stahl, Edelstahl und/oder vorzugsweise Aluminium. Insbesondere kann die zumindest eine Halteeinheit einstückig mit einer Abschirmeinheit der Kochfeldvorrichtung zur Abschirmung einer Elektronikeinheit ausgebildet sein. Unter "einstückig" soll in diesem Zusammenhang insbesondere zumindest stoffschlüssig verbunden verstanden werden. Der Stoffschluss kann beispielsweise durch einen Klebeprozess, einen Schweißprozess, einen Lötprozess und/oder einen anderen, einem Fachmann als sinnvoll erscheinenden, Prozess hergestellt werden. Vorteilhaft soll unter einstückig jedoch in einem Stück geformt verstanden werden. Vorzugsweise wird dieses eine Stück aus einem einzelnen Rohling hergestellt. Ferner soll unter einem "elastischen Element" insbesondere ein Element, vorzugsweise ein Rückstellelement, verstanden werden, das zumindest einen Teilbereich aufweist, der in einem normalen Betriebszustand zumindest in seiner Position um zumindest 3 mm, vorteilhaft um zumindest 5 mm, vorzugsweise um zumindest 8 mm, elastisch veränderbar ist, und das insbesondere eine von einer Veränderung der Position abhängige und vorzugsweise zu der Veränderung proportionale Gegenkraft erzeugt, die insbesondere der Veränderung entgegen wirkt. Insbesondere ist das zumindest eine elastische Element wiederholt, insbesondere zumindest 100-mal, vorzugsweise zumindest 500-mal, insbesondere beschädigungsfrei, verformbar und strebt insbesondere nach einer Verformung selbstständig wieder einer Grundform zu. Vorzugsweise weist das zumindest eine elastische Element in einem montierten Zustand, insbesondere in einem montierten Zustand der zumindest einen Anpresseinheit und/oder in dem montierten Zustand, eine Vorspannung auf. Die zumindest eine Hülseneinheit kann insbesondere aus einem beliebigen einem Fachmann als sinnvoll erscheinenden, vorzugsweise nichtleitenden und/oder unmagnetischen, Material bestehen, wie beispielweise zumindest teilweise, vorzugsweise zu wenigstens einem Großteil und besonders bevorzugt vollständig aus Kunststoff und/oder einem Verbundwerkstoff. Alternativ ist jedoch auch denkbar, dass die zumindest eine Hülseneinheit zumindest teilweise, vorzugsweise zu wenigstens einem Großteil und besonders bevorzugt vollständig aus einem elektrisch leitenden Material, insbesondere einem Metall, vorzugsweise Aluminium, besteht, insbesondere um ein Potential, vorzugsweise ein Massepotential, besonders bevorzugt ein geerdetes Massepotential, an die zumindest eine Heizeinheit und/oder die zumindest eine Halteeinheit und/oder zumindest einen Teil der zumindest einen Heizeinheit und/oder der zumindest einen Halteeinheit anzulegen. Vorzugsweise ist die zumindest eine Hülseneinheit zumindest teilweise zwischen dem zumindest einen elastischen Element und der zumindest einen Heizeinheit und/oder der zumindest einen Halteeinheit angeordnet. Darunter, dass ein Objekt ein weiteres Objekt zumindest teilweise "umschließt" soll in diesem Zusammenhang insbesondere verstanden werden, dass zumindest eine von dem weiteren Objekt ausgehende Gerade zumindest einen Schnittpunkt mit dem Objekt aufweist. Darunter, dass ein Objekt ein weiteres Objekt zu wenigstens einem Großteil "umschließt" soll in diesem Zusammenhang insbesondere verstanden werden, dass zumindest 70 %, vorteilhaft zumindest 80 %, vorzugsweise zumindest 90 % und besonders bevorzugt zumindest 95 % aller möglichen von dem weiteren Objekt ausgehenden, insbesondere verschiedenen, Geraden zumindest einen Schnittpunkt mit dem Objekt aufweisen.

Durch diese Ausgestaltung kann eine gattungsgemäße Gargerätevorrichtung mit verbesserten Eigenschaften hinsichtlich einer Anpressung bereitgestellt werden. Insbesondere kann eine vorteilhafte Schutzwirkung erreicht werden, insbesondere da ein mögliches Einklemmen von elektrischen Leitungen, insbesondere Kabeln, insbesondere durch das zumindest eine elastische Element, und/oder ein mögliches Abknicken des zumindest einen elastischen Elements vorteilhaft verhindert werden kann. Somit kann insbesondere eine Qualität und/oder eine Lebensdauer der Kochfeldvorrichtung vorteilhaft erhöht werden. Ferner kann insbesondere ein vorteilhafter Kraftübertrag, insbesondere eines Anpressdrucks, ermöglicht werden, so dass ein Kraftaufwand vorteilhaft minimiert werden kann.

Das zumindest eine elastische Element könnte beispielweise als Polymer, als Elastomer und/oder als Silikonelement ausgebildet sein und/oder zumindest teilweise, vorzugsweise zu wenigstens einem Großteil und besonders bevorzugt vollständig aus einem Polymer, einem Elastomer und/oder Silikon bestehen. Vorzugsweise ist das zumindest eine elastische Element jedoch als eine Feder, insbesondere als eine Druckfeder, insbesondere eine Kegelfeder und/oder vorzugsweise eine Schraubenfeder, ausgebildet. Vorteilhaft besteht das zumindest eine elastische Element zumindest teilweise, vorzugsweise zu wenigstens einem Großteil und besonders bevorzugt vollständig aus, vorzugsweise gehärtetem, Stahl, insbesondere Federstahl. Alternativ ist denkbar, dass das zumindest eine elastische Element zumindest teilweise, vorzugsweise zu wenigstens einem Großteil und besonders bevorzugt vollständig aus einem Kunststoff, einer Legierung und/oder einem Verbundwerkstoff besteht. Insbesondere weist das zumindest eine elastische Element eine Federkonstante von höchstens 20 N/mm, vorteilhaft von höchstens 15 N/mm, vorzugsweise von höchstens 10 N/mm und besonders bevorzugt von höchstens 5 N/mm auf. Insbesondere weist das zumindest eine elastische Element eine Materialstärke von zumindest 0,5 mm, insbesondere zumindest 0,75 mm, und von maximal 4 mm, insbesondere maximal 3 mm, vorteilhaft maximal 2 mm, auf. Vorteilhaft ist das zumindest eine elastische Element zumindest teilweise, vorzugsweise zu wenigstens einem Großteil und besonders bevorzugt vollständig aus zumindest einem, vorzugsweise genau einem, Draht gebildet. In diesem Fall ist die Materialstärke insbesondere durch einen Durchmesser, insbesondere eines Querschnitts, des zumindest einen Drahts gegeben. Hierdurch kann insbesondere ein kostengünstiges sowie einfach aufgebautes elastisches Element bereitgestellt werden.

Die Hülseneinheit weist zumindest ein, vorzugsweise genau ein, Hülsengehäuse und zumindest ein, vorzugsweise genau ein, insbesondere relativ zu dem zumindest einen Hülsengehäuse beweglich gelagertes Anpresselement auf, hierdurch kann insbesondere eine kostengünstige Hülseneinheit bereitgestellt werden. Ferner kann ein Montageaufwand vorteilhaft verringert werden. Der Ausdruck "beweglich gelagert" soll in diesem Zusammenhang insbesondere eine Lagerung eines Objekts definieren, wobei das Objekt eine Bewegungsmöglichkeit entlang zumindest einer Strecke von zumindest 1 mm, vorzugsweise von zumindest 3 mm und besonders bevorzugt von zumindest 5 mm aufweist, insbesondere relativ zu einem weiteren Objekt. Das zumindest eine Hülsengehäuse weist dabei vorzugsweise zumindest einen Aufnahmebereich auf, welcher insbesondere durch zumindest eine Hülsengehäusewand, insbesondere eine Hülsengehäuseseitenwand, insbesondere eine Hülsengehäuseseitenfläche, und insbesondere zumindest einen Hülsengehäuseboden zumindest teilweise, insbesondere auf zumindest zwei und/oder fünf Seiten begrenzt ist.

Ferner wird vorgeschlagen, dass das zumindest eine Hülsengehäuse das zumindest eine elastische Element im montierten Zustand zumindest in Umfangsrichtung zumindest teilweise, vorzugsweise wenigstens zu einem Großteil und besonders bevorzugt vollständig umschließt und/oder umgreift. Hierdurch kann insbesondere eine vorteilhaft einfache Schutzwirkung erreicht werden.

In einer Ausgestaltung der Erfindung wird vorgeschlagen, dass das zumindest eine Hülsengehäuse das zumindest eine Anpresselement im montierten Zustand zumindest in Umfangsrichtung zumindest teilweise und vorzugsweise zu wenigstens einem Großteil umschließt und/oder umgreift. Alternativ ist jedoch auch denkbar, dass das zumindest eine Anpresselement das zumindest eine Hülsengehäuse im montierten Zustand zumindest in Umfangsrichtung zumindest teilweise und vorzugsweise zu wenigstens einem Großteil umschließt und/oder umgreift. Hierdurch kann insbesondere eine einfache Verbindung des zumindest einen Hülsengehäuses und des zumindest einen Anpresselements und/oder eine vorteilhafte Lagerung des zumindest einen Anpresselements erreicht werden.

Des Weiteren wird vorgeschlagen, dass das zumindest eine Anpresselement im montierten Zustand von dem zumindest einen elastischen Element zumindest teilweise umschlossen und/oder umgriffen ist. Insbesondere weist das zumindest eine Anpresselement zumindest einen Schaft auf, insbesondere auf einer der zumindest einen Heizeinheit abgewandten Seite, welcher im montierten Zustand insbesondere von dem zumindest einen elastischen Element wenigstens in Umfangsrichtung zumindest teilweise, vorzugsweise zu wenigstens einem Großteil und besonders bevorzugt vollständig umschlossen und/oder umgriffen ist. Hierdurch kann insbesondere eine stabile und sichere Verbindung zwischen der zumindest einen Hülseneinheit und dem zumindest einen elastischen Element erreicht werden.

Das zumindest eine Anpresselement ist zumindest teilweise konisch zulaufend ausgebildet, insbesondere auf einer der zumindest einen Heizeinheit zugewandten Seite, hierdurch kann insbesondere ein Anpressdruck vorteilhaft übertragen werden. Ferner kann ein Einklemmen von elektrischen Leitungen, insbesondere durch das zumindest eine Anpresselement zumindest im Wesentlichen ausgeschlossen werden.

Das zumindest eine Hülsengehäuse und das zumindest eine Anpresselement sind im montierten Zustand in zumindest eine Richtung parallel zu einer Anpresskraft formschlüssig verbunden. Vorzugsweise sind das zumindest eine Hülsengehäuse und das zumindest eine Anpresselement im montierten Zustand ferner in zumindest eine Richtung senkrecht zu einer Anpresskraft und/oder senkrecht zu einer Längserstreckung des zumindest einen Hülsengehäuses und/oder des zumindest einen elastischen Elements formschlüssig verbunden. Darunter, dass ein Objekt mit einem weiteren Objekt "formschlüssig" verbunden ist, soll insbesondere verstanden werden, dass das Objekt zumindest ein Formschlusselement aufweist, welches, insbesondere in einem montierten Zustand, mit zumindest einem, insbesondere zu dem zumindest einen Formschlusselement korrespondierenden Formschlusselement des weiteren Objekts einen Formschluss bildet. Unter einer "Längserstreckung" eines Objekts soll in diesem Zusammenhang insbesondere eine längste Kante und/oder Seite eines kleinsten, das Objekt gerade noch umschließenden Quaders verstanden werden. Hierdurch kann insbesondere eine stabile und sichere Verbindung zwischen dem zumindest einen Hülsengehäuse und dem zumindest einen Anpresselement erreicht werden.

Ferner wird vorgeschlagen, dass das zumindest eine Hülsengehäuse und das zumindest eine Anpresselement im montierten Zustand wenigstens durch eine Rastverbindung miteinander verbunden sind. Dazu weist das zumindest eine Hülsengehäuse und/oder das zumindest eine Anpresselement zumindest ein Rastelement, insbesondere einen, vorzugsweise federelastisch auslenkbaren, Rasthaken, eine Rastausnehmung und/oder eine Rastkante, auf. Hierdurch kann insbesondere eine einfache und schnelle Verbindung zwischen dem zumindest einen Hülsengehäuse und dem zumindest einen Anpresselement erreicht werden.

Sind das zumindest eine Hülsengehäuse und das zumindest eine Anpresselement im montierten Zustand wenigstens durch eine Bajonettverbindung, insbesondere Drehverriegelung, miteinander verbunden, kann insbesondere eine vorteilhaft einfach lösbare Verbindung geschaffen werden.

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: ein als Induktionskochfeld ausgebildetes Kochfeld mit einer Kochfeldvorrichtung in einer schematischen Draufsicht,
- Fig. 2: ein Teil des Kochfelds in einer perspektivischen Seitenansicht,
- Fig. 3: eine Explosionsdarstellung einer Anpresseinheit der Kochfeldvorrichtung in einer Seitenansicht,
- Fig. 4: die Anpresseinheit aus Figur 2 in einem montierten Zustand,
- Fig. 5: die Anpresseinheit aus Figur 3 in einer Seitenansicht,
- Fig. 6: eine Explosionsdarstellung einer Anpresseinheit einer weiteren Kochfeldvorrichtung in einer Seitenansicht,
- Fig. 7: die Anpresseinheit aus Figur 5 in einem montierten Zustand und
- Fig. 8: die Anpresseinheit aus Figur 6 in einer Schnittansicht.

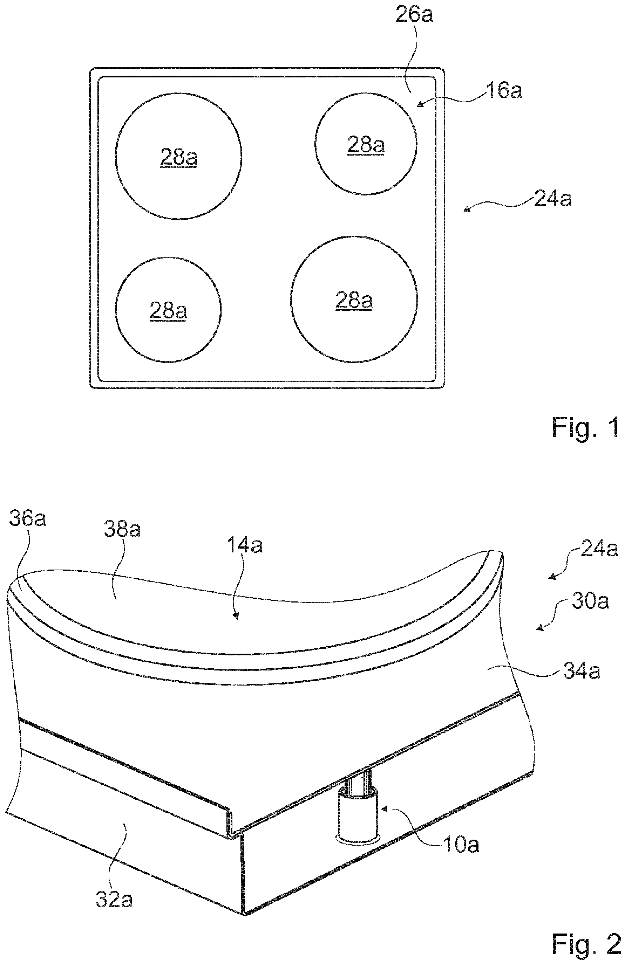

Figur 1 zeigt ein beispielhaftes als Induktionskochfeld ausgebildetes Kochfeld 24a in einer schematischen Draufsicht. Das Kochfeld 24a umfasst eine Kochfeldvorrichtung. Die Kochfeldvorrichtung weist eine Kochfeldplatte 16a auf. In Figur 1 ist dabei eine Außenseite 26a der Kochfeldplatte 16a gezeigt. Die Kochfeldplatte 16a besteht aus Glaskeramik. Die Kochfeldplatte 16a ist quaderförmig ausgebildet. Die Kochfeldplatte 16a umfasst vier Heizzonen 28a.

Figur 2 zeigt einen Innenraum 30a des Kochfelds 24a. Die Kochfeldvorrichtung umfasst eine Gehäuseeinheit 32a. Die Gehäuseeinheit 32a besteht aus Aluminium. Die Gehäuseeinheit 32a ist zumindest im Wesentlichen wannenförmig ausgebildet. Die Gehäuseeinheit 32a und die Kochfeldplatte 16a begrenzen den Innenraum 30a des Kochfelds 24a.

Die Kochfeldvorrichtung umfasst eine Halteeinheit 34a. Die Halteeinheit 34a ist in dem Innenraum 30a angeordnet. Die Halteeinheit 34a ist als Halteplatte ausgebildet. Die Halteeinheit 34a ist einstückig ausgebildet. Im vorliegenden Fall besteht die Halteeinheit 34a aus Aluminium. Die Halteeinheit 34a ist zumindest im Wesentlichen quaderförmig ausgebildet. Die Halteeinheit 34a weist eine Länge von etwa 55 cm auf. Die Halteeinheit 34a weist eine Breite von etwa 50 cm auf. Ferner weist die Halteeinheit 34a eine konstante Materialstärke auf. Die Halteeinheit 34a weist eine Materialstärke von etwa 1,5 mm auf.

Die Kochfeldvorrichtung weist zudem mehrere Heizeinheiten 14a auf. Im vorliegenden Fall umfasst die Kochfeldvorrichtung vier Heizeinheiten 14a. Jede Heizeinheit 14a ist dabei einer der Heizzonen 28a zugeordnet. Die Heizeinheiten 14a sind zumindest im Wesentlichen identisch miteinander ausgebildet. Die Heizeinheiten 14a sind in dem Innenraum 30a angeordnet. Die Heizeinheiten 14a sind zwischen der Kochfeldplatte 16a, insbesondere einer Innenseite der Kochfeldplatte 16a, und der Halteeinheit 34a angeordnet. Die Heizeinheiten 14a sind auf der Halteeinheit 34a befestigt. Jede der Heizeinheiten 14a weist dabei ein Trägerelement 36a auf. Ferner weist jede der Heizeinheiten 14a ein Heizelement 38a auf. Die Heizelemente 38a sind als Induktoren ausgebildet. Die Heizelemente 38a sind dazu vorgesehen, ein hochfrequentes Magnetfeld zu erzeugen, um Gargeschirr zu erhitzen. Die Heizelemente 38a sind jeweils auf einem der Trägerelemente 36a befestigt. Die Trägerelemente 36a sind im vorliegenden Fall im Vergleich zu den Heizelementen 38a in Richtung der Kochfeldplatte 16a um 2 mm erhöht ausgebildet. Alternativ ist auch denkbar, dass eine Heizeinheit mehrere Trägerelemente, insbesondere zumindest zwei und/oder zumindest drei Trägerelemente, und/oder mehrere Heizelemente, insbesondere zumindest zwei und/oder zumindest drei Heizelemente, umfasst. Ferner ist denkbar, dass Heizelemente im Vergleich zu Trägerelementen erhöht ausgebildet sind und/oder eine gleiche Höhe aufweisen. Alternativ ist auch denkbar, dass eine Kochfeldvorrichtung eine Heizmatrix aufweist, beispielweise mit 4×4-Heizelementen.

Ferner weist die Kochfeldvorrichtung mehrere Anpresseinheiten 10a auf. Im vorliegenden Fall weist die Kochfeldvorrichtung neun Anpresseinheiten 10a auf. Alternativ kann eine Kochfeldvorrichtung auch eine andere Anzahl an Anpresseinheiten aufweisen, wie beispielweise zumindest zwei, zumindest vier, zumindest sechs, zumindest acht und/oder zumindest zehn Anpresseinheiten. Die Anpresseinheiten 10a sind miteinander identisch ausgebildet. Die Anpresseinheiten 10a sind zwischen der Gehäuseeinheit 32a und der Halteeinheit 34a angeordnet. Die Anpresseinheiten 10a sind an der Gehäuseeinheit 32a, insbesondere stoffschlüssig, befestigt. Ferner sind die Anpresseinheiten 10a mit der Halteeinheit 34a in Kontakt. Dabei weist jede der Anpresseinheiten 10a mit der Halteeinheit 34a eine Kontaktfläche auf. Die Anpresseinheiten 10a sind dazu vorgesehen, die Halteeinheit 34a in Richtung der Kochfeldplatte 16a zu drücken. Dabei sind die Anpresseinheiten 10a dazu vorgesehen, die Heizeinheiten 14a gegen die Kochfeldplatte 16a, insbesondere die Innenseite der Kochfeldplatte 16a, zu pressen. Im vorliegenden Fall sind die Anpresseinheiten 10a dazu vorgesehen, die Trägerelemente 36a unmittelbar gegen die Unterseite der Kochfeldplatte 16a zu pressen. Ein Abstand zwischen den Heizelementen 38a und der Unterseite der Kochfeldplatte 16a beträgt dabei 2 mm. Alternativ ist auch denkbar, dass Anpresseinheiten dazu vorgesehen sind, Heizelemente unmittelbar gegen eine Unterseite einer Kochfeldplatte zu pressen, so dass ein Abstand zwischen den Heizelementen und der Unterseite insbesondere 0 mm beträgt.

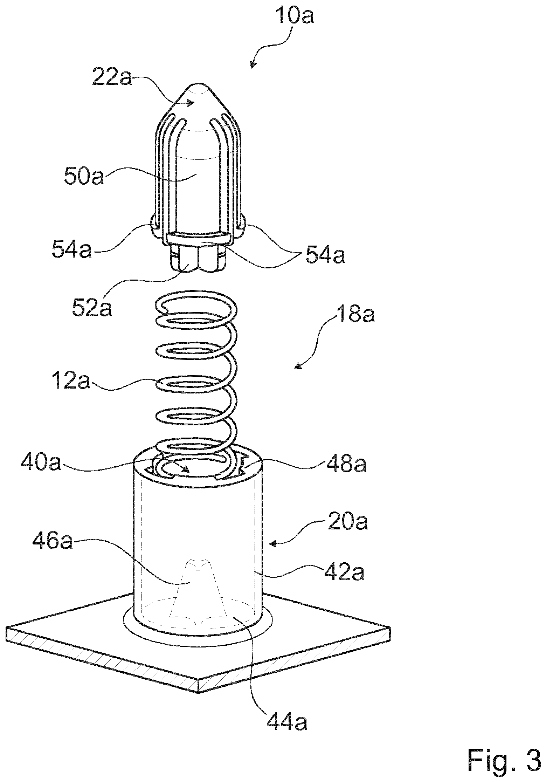

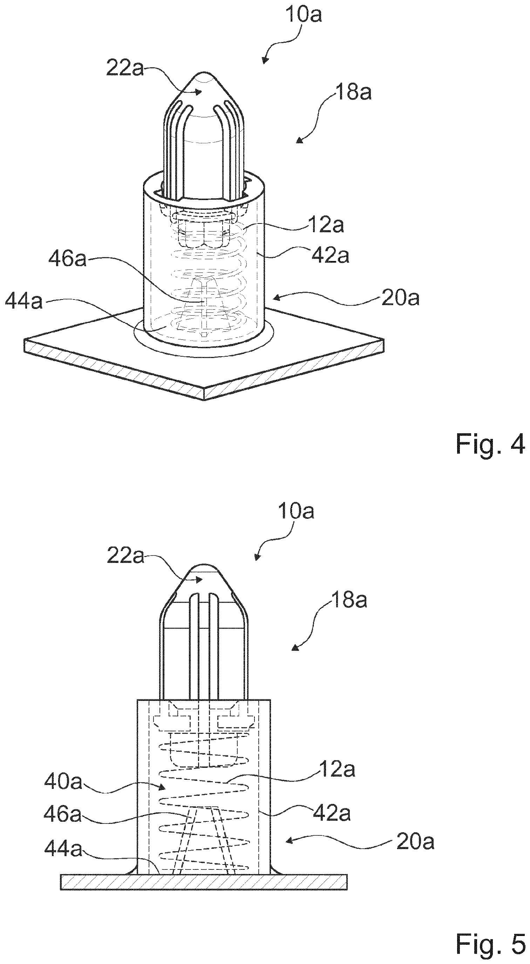

Die Figuren 3 bis 5 zeigen eine der Anpresseinheiten 10a in einer vergrößerten Explosionsdarstellung (vgl. Figur 3), in einem montierten Zustand (vgl. Figur 4) sowie in einer Seitenansicht (vgl. Figur 5). Die folgende Beschreibung beschränkt sich dabei auf eine der Anpresseinheiten 10a, kann jedoch für die anderen Anpresseinheiten 10a übernommen werden.

Die Anpresseinheit 10a weist ein elastisches Element 12a auf. Das elastische Element 12a ist als Schraubenfeder ausgebildet. Das elastische Element 12a besteht aus gehärtetem Federstahl. Das elastische Element 12a weist eine Materialstärke von 1 mm auf. Das elastische Element 12a weist in einem unbelasteten Zustand eine Längserstreckung von 23 mm auf. Das elastische Element 12a weist einen Radius von etwa 3,8 mm auf. Im vorliegenden Fall weist das elastische Element 12a eine Federkonstante von 3,2 N/mm auf.

Ferner weist die Anpresseinheit 10a eine Hülseneinheit 18a auf. Die Hülseneinheit 18a besteht zumindest im Wesentlichen aus Polypropylen. Die Hülseneinheit 18a ist zweiteilig ausgebildet. Die Hülseneinheit 18a weist ein Hülsengehäuse 20a auf. Das Hülsengehäuse 20a ist im vorliegenden Fall der Übersichtlichkeit wegen durchsichtig dargestellt. Das Hülsengehäuse 20a ist einstückig ausgebildet. Das Hülsengehäuse 20a ist zumindest im Wesentlichen zylinderförmig. Das Hülsengehäuse 20a weist eine Höhe und/oder Länge von etwa 21 mm auf. Das Hülsengehäuse 20a weist einen Radius von etwa 4 mm auf. Das Hülsengehäuse 20a ist hohl ausgebildet. Eine Wandstärke des Hülsengehäuses 20a beträgt im vorliegenden Fall etwa 2 mm. Das Hülsengehäuse 20a weist einen Aufnahmebereich 40a auf. Der Aufnahmebereich 40a ist zu dem Hülsengehäuse 20a korrespondierend ausgebildet. Der Aufnahmebereich 40a ist durch eine Hülsengehäuseseitenfläche 42a und einen Hülsengehäuseboden 44a begrenzt. Demnach ist der Aufnahmebereich 40a in eine Richtung geöffnet. Der Aufnahmebereich 40a weist eine Öffnung in Richtung der Heizeinheit 14a und/oder der Kochfeldplatte 16a auf. Ferner weist das Hülsengehäuse 20a einen Hülsengehäusedorn 46a auf. Der Hülsengehäusedorn 46a ist an dem Hülsengehäuseboden 44a angeordnet. Der Hülsengehäusedorn 46a ist zumindest im Wesentlichen konisch ausgebildet. Der Hülsengehäusedorn 46a weist eine Höhe von etwa 8 mm auf. Ferner weist das Hülsengehäuse 20a mehrere Formschlusselemente 48a auf. Im vorliegenden Fall weist das Hülsengehäuse 20a drei Formschlusselemente 48a auf. Die Formschlusselemente 48a sind in einem Nahbereich der Öffnung angeordnet. Die Formschlusselemente 48a sind als Rastelemente ausgebildet. Die Formschlusselemente 48a sind als Rastkanten ausgebildet.

Des Weiteren weist die Hülseneinheit 18a ein Anpresselement 22a auf. Das Anpresselement 22a ist einstückig ausgebildet. Das Anpresselement 22a weist einen Grundkörper 50a auf. Ein der Heizeinheit 14a und/oder der Kochfeldplatte 16a zugewandter erster Abschnitt des Grundkörpers 50a ist konisch zulaufend ausgebildet. Der erste Abschnitt weist eine Höhe und/oder Länge von etwa 7 mm auf. Der erste Abschnitt weist einen minimalen Radius von etwa 1,5 mm auf. Ein an den ersten Abschnitt angrenzender zweiter Abschnitt des Grundkörpers 50a ist zylinderförmig ausgebildet. Der zweite Abschnitt weist eine Höhe und/oder Länge von etwa 13 mm auf. Der zweite Abschnitt weist einen Radius von etwa 3,8 mm auf. Ferner weist das Anpresselement 22a einen Schaft 52a auf. Der Schaft 52a ist auf einer der Heizeinheit 14a und/oder der Kochfeldplatte 16a abgewandten Seite des Anpresselements 22a angeordnet. Der Schaft 52a weist eine Höhe und/oder Länge von etwa 3,5 mm auf. Der Schaft 52a ist zumindest im Wesentlichen zu dem elastischen Element 12a korrespondierend ausgebildet. Ferner weist das Anpresselement 22a mehrere Formschlusselemente 54a auf. Im vorliegenden Fall weist das Anpresselement 22a drei Formschlusselemente 54a auf. Die Formschlusselemente 54a sind an dem Grundkörper 50a, insbesondere dem zweiten Abschnitt des Grundkörpers 50a, angeordnet. Die Formschlusselemente 54a sind in einem Nahbereich des Schafts 52a angeordnet. Die Formschlusselemente 54a erstrecken sich zumindest im Wesentlichen über den gesamten zweiten Abschnitt des Grundkörpers 50a. Die Formschlusselemente 54a sind als Rastelemente ausgebildet. Die Formschlusselemente 54a sind als Rasthaken ausgebildet. Die Formschlusselemente 54a sind zu den Formschlusselementen 48a korrespondierend ausgebildet. Alternativ ist auch denkbar, dass Formschlusselemente eines Hülsengehäuses als Rasthaken ausgebildet sind und Formschlusselemente eines Anpresselements als Rastkanten. Ferner ist denkbar an einem Hülsengehäuse und/oder einem Anpresselement eine andere Anzahl an Formschlusselementen vorzusehen, insbesondere ein Formschlusselement, zwei Formschlusselemente und/oder vier Formschlusselemente.

Die Figuren 4 und 5 zeigen die Anpresseinheit 10a in einem montierten Zustand. In dem montierten Zustand bilden das Hülsengehäuse 20a und das Anpresselement 22a einen zumindest im Wesentlichen geschlossenen Aufnahmebereich für das elastische Element 12a. Dabei ist das Anpresselement 22a, insbesondere der Schaft 52a, zumindest teilweise in dem Aufnahmebereich 40a angeordnet. Somit umschließt das Hülsengehäuse 20a das Anpresselement 22a in Umfangsrichtung zumindest teilweise. Ferner verschließt das Anpresselement 22a die Öffnung des Aufnahmebereichs 40a. Dabei ist das Anpresselement 22a beweglich gelagert. Im vorliegenden Fall sind das Hülsengehäuse 20a und das Anpresselement 22a in einer Richtung parallel zu einer Anpresskraft durch eine Rastverbindung miteinander verbunden. Dabei hintergreifen die Formschlusselemente 54a des Anpresselements 22a die Formschlusselemente 48a des Hülsengehäuses 20a.

Ferner ist das elastische Element 12a vollständig in dem Aufnahmebereich 40a angeordnet. Dabei weist das elastische Element 12a eine Vorspannung auf. In dem montierten Zustand weist das elastische Element 12a eine Längserstreckung von 13 mm auf. Im vorliegenden Fall umschließt das Hülsengehäuse 20a das elastische Element 12a in Umfangsrichtung vollständig. Ferner umschließen der Hülsengehäuseboden 44a und das Anpresselement 22a die Längsseiten des elastischen Elements 12a vollständig. Demnach umschließt die Hülseneinheit 18a das elastische Element 12a vollständig. Das elastische Element 12a umschließt ferner den Schaft 52a des Anpresselements 22a. Zudem umschließt das elastische Element 12a den Hülsengehäusedorn 46a des Hülsengehäuses 20a. Der Hülsengehäusedorn 46a und/oder der Schaft 52a sind dazu vorgesehen, ein Ausknicken des elastischen Elements 12a zu verhindern und/oder das elastische Element 12a zu zentrieren.

Im vorliegenden Fall kann sich das Anpresselement 22a entlang einer Strecke von etwa 8 mm in die Richtung parallel zu der Anpresskraft und/oder in Richtung der Heizeinheit 14a und/oder der Kochfeldplatte 16a bewegen. Eine Bewegung des Anpresselements 22a ist durch die Formschlusselemente 54a und die Formschlusselemente 48a begrenzt. Ferner ist die Bewegung des Anpresselements 22a durch den Hülsengehäusedorn 46a und/oder eine minimale Längserstreckung des elastischen Elements 12a begrenzt.

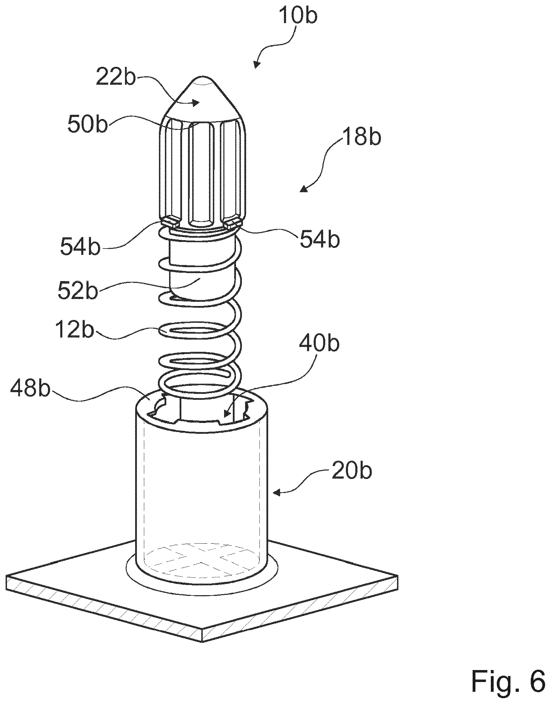

In den Figuren 6 bis 8 ist ein weiteres Ausführungsbeispiel der Erfindung gezeigt. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung des anderen Ausführungsbeispiels, insbesondere der Figuren 1 bis 5, verwiesen werden kann. Zur Unterscheidung der Ausführungsbeispiele ist der Buchstabe a den Bezugszeichen des Ausführungsbeispiels in den Figuren 1 bis 5 nachgestellt. In dem Ausführungsbeispiel der Figuren 6 bis 8 ist der Buchstabe a durch den Buchstaben b ersetzt.

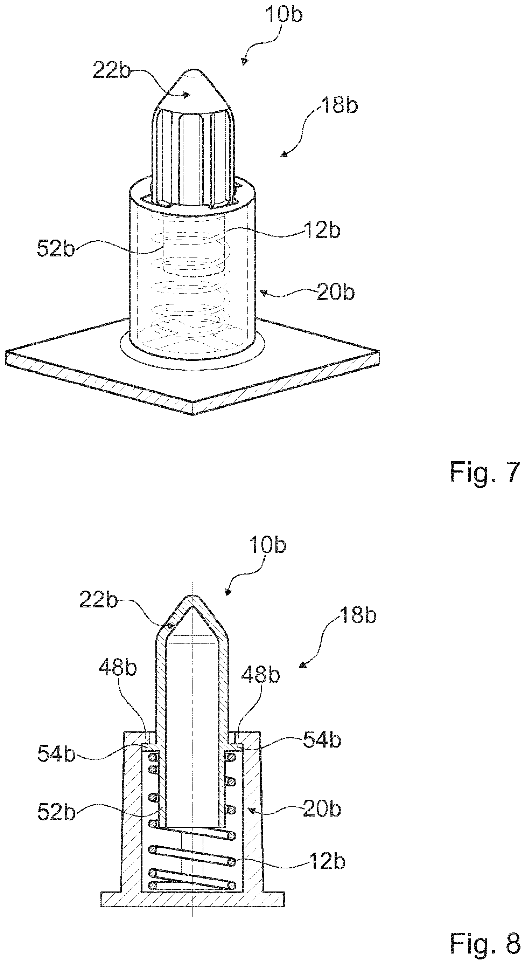

Die Figuren 6 bis 8 zeigen eine Anpresseinheit 10b einer weiteren Kochfeldvorrichtung in einer vergrößerten Explosionsdarstellung (vgl. Figur 6), in einem montierten Zustand (vgl. Figur 7) sowie in einer Schnittansicht (vgl. Figur 8). Das weitere Ausführungsbeispiel unterscheidet sich von dem vorherigen Ausführungsbeispiel zumindest im Wesentlichen durch eine Hülseneinheit 18b der Anpresseinheit 10b.

Im vorliegenden Fall ist ein Hülsengehäuse 20b frei von einem Hülsengehäusedorn. Ferner weist das Hülsengehäuse 20b mehrere Formschlusselemente 54b auf. Die Formschlusselemente 54b sind als Drehverriegelungselemente ausgebildet.

Zudem ist ein Anpresselement 22b im vorliegenden Fall hohl ausgebildet. Eine Wandstärke des Anpresselements 22b beträgt etwa 2 mm. Das Anpresselement 22b weist einen Schaft 52b auf. Der Schaft 52b ist zumindest im Wesentlichen zylinderförmig ausgebildet. Der Schaft 52a weist eine Höhe und/oder Länge von etwa 5 mm auf. Das Anpresselement 22b weist des Weiteren mehrere Formschlusselemente 54b auf. Die Formschlusselemente 54b sind als zu den Formschlusselementen 54b korrespondierende Drehverriegelungselemente ausgebildet.

Die Figuren 7 und 8 zeigen die Anpresseinheit 10b in einem montierten Zustand. Im vorliegenden Fall sind das Hülsengehäuse 20b und das Anpresselement 22b in einer Richtung parallel zu einer Anpresskraft durch eine Bajonettverbindung miteinander verbunden. Dabei hintergreifen, insbesondere durch Verdrehung des Anpresselements 22b, die Formschlusselemente 54b des Anpresselements 22b die Formschlusselemente 48b des Hülsengehäuses 20b. Dabei ist eine Bewegung des Anpresselements 22b durch die Formschlusselemente 54b und die Formschlusselemente 48b begrenzt. Ferner ist die Bewegung des Anpresselements 22b durch eine minimale Längserstreckung eines elastischen Elements 12b begrenzt.

### Bezugszeichen

- 10: Anpresseinheit
- 12: elastisches Element
- 14: Heizeinheit
- 16: Kochfeldplatte
- 18: Hülseneinheit
- 20: Hülsengehäuse
- 22: Anpresselement
- 24: Kochfeld
- 26: Außenseite
- 28: Heizzone
- 30: Innenraum
- 32: Gehäuseeinheit
- 34: Halteeinheit
- 36: Trägerelement
- 38: Heizelement
- 40: Aufnahmebereich
- 42: Hülsengehäuseseitenfläche
- 44: Hülsengehäuseboden
- 46: Hülsengehäusedorn
- 48: Formschlusselement
- 50: Grundkörper
- 52: Schaft
- 54: Formschlusselement

## Patentansprüche

1. Kochfeldvorrichtung, insbesondere Induktionskochfeldvorrichtung, mit zumindest einer Anpresseinheit (10a; 10b), welche zumindest ein elastisches Element (12a; 12b) aufweist und welche dazu vorgesehen ist, zumindest eine Heizeinheit (14a; 14b) gegen eine Kochfeldplatte (16a; 16b) zu pressen, wobei die zumindest eine Anpresseinheit (10a; 10b) zumindest eine Hülseneinheit (18a; 18b) aufweist, welche das zumindest eine elastische Element (12a; 12b) in einem montierten Zustand zu wenigstens einem Großteil umschließt, und wobei die zumindest eine Hülseneinheit (18a; 18b) zumindest ein Hülsengehäuse (20a; 20b) und zumindest ein beweglich gelagertes Anpresselement (22a; 22b) aufweist, wobei das zumindest eine Hülsengehäuse (20a; 20b) und das zumindest eine Anpresselement (22a; 22b) im montierten Zustand in zumindest eine Richtung parallel zu einer Anpresskraft formschlüssig verbunden sind, **dadurch gekennzeichnet, dass** das zumindest eine Anpresselement (22a; 22b) zumindest teilweise konisch zulaufend ausgebildet ist.

2. Kochfeldvorrichtung nach Anspruch 1, **dadurch gekennzeichnet, dass** das zumindest eine elastische Element (12a; 12b) als eine Feder ausgebildet ist.

3. Kochfeldvorrichtung nach Anspruch 1 oder 2, **dadurch gekennzeichnet, dass** das zumindest eine Hülsengehäuse (20a; 20b) das zumindest eine elastische Element (12a; 12b) im montierten Zustand zumindest in Umfangsrichtung zumindest teilweise umschließt.

4. Kochfeldvorrichtung nach einem der vorhergehenden Ansprüche, **dadurch gekennzeichnet, dass** das zumindest eine Hülsengehäuse (20a; 20b) das zumindest eine Anpresselement (22a; 22b) im montierten Zustand zumindest in Umfangsrichtung zumindest teilweise umschließt.

5. Kochfeldvorrichtung nach einem der vorhergehenden Ansprüche, **dadurch gekennzeichnet, dass** das zumindest eine Anpresselement (22a; 22b) im montierten Zustand von dem zumindest einen elastischen Element (12a; 12b) zumindest teilweise umschlossen ist.

6. Kochfeldvorrichtung nach einem der vorhergehenden Ansprüche, **dadurch gekennzeichnet, dass** das zumindest eine Hülsengehäuse (20a) und das zumindest eine Anpresselement (22a) im montierten Zustand wenigstens durch eine Rastverbindung miteinander verbunden sind.

7. Kochfeldvorrichtung nach einem der vorhergehenden Ansprüche, **dadurch gekennzeichnet, dass** das zumindest eine Hülsengehäuse (20b) und das zumindest eine Anpresselement (22b) im montierten Zustand wenigstens durch eine Bajonettverbindung miteinander verbunden sind.

8. Kochfeld (24a; 24b), insbesondere Induktionskochfeld, mit zumindest einer Kochfeldvorrichtung nach einem der Ansprüche 1 bis 7.

## Claims

1. Hob apparatus, in particular induction hob apparatus, with at least one press-on unit (10a; 10b), which has at least one elastic element (12a; 12b) and which is provided to press at least one heating unit (14a; 14b) against a hob plate (16a; 16b), wherein the at least one press-on unit (10a; 10b) has at least one sleeve unit (18a; 18b), which in an assembled state surrounds at least a majority of the at least one elastic element (12a; 12b), and wherein the at least one sleeve unit (18a; 18b) has at least one sleeve housing (20a; 20b) and at least one press-on element (22a; 22b) mounted such that it is able to move, wherein in the assembled state the at least one sleeve housing (20a; 20b) and the at least one press-on element (22a; 22b) are connected with a positive fit in at least one direction in parallel with a contact force, **characterised in that** the at least one press-on element (22a; 22b) is embodied such that it is at least partially conically tapering.

2. Hob apparatus according to claim 1, **characterised in that** the at least one elastic element (12a; 12b) is embodied as a spring.

3. Hob apparatus according to claim 1 or 2, **characterised in that** in the assembled state the at least one sleeve housing (20a; 20b) at least partially surrounds the at least one elastic element (12a; 12b), at least in the peripheral direction.

4. Hob apparatus according to one of the preceding claims, **characterised in that** in the assembled state the at least one sleeve housing (20a; 20b) at least partially surrounds the at least one press-on element (22a; 22b), at least in the peripheral direction.

5. Hob apparatus according to one of the preceding claims, **characterised in that** in the assembled state the at least one press-on element (22a; 22b) is at least partially surrounded by the at least one elastic element (12a; 12b).

6. Hob apparatus according to one of the preceding claims, **characterised in that** in the assembled state the at least one sleeve housing (20a) and the at least one press-on element (22a) are interconnected at least by way of a latching connection.

7. Hob apparatus according to one of the preceding claims, **characterised in that** in the assembled state the at least one sleeve housing (20b) and the at least one press-on element (22b) are interconnected at least by way of a bayonet connection.

8. Hob (24a; 24b), in particular induction hob, with at least one hob apparatus according to one of claims 1 to 7.

## Revendications

1. Dispositif de champ de cuisson, en particulier dispositif de champ de cuisson à induction avec au moins une unité de pression (10a ; 10b), laquelle présente au moins un élément élastique (12a ; 12b) et laquelle est prévue afin de presser au moins une unité de chauffe (14a ; 14b) contre une plaque de champ de cuisson (16a ; 16b), dans lequel l'au moins une unité de pression (10a ; 10b) présente au moins une unité formant fourreau (18a ; 18b), laquelle entoure au moins en majeure partie l'au moins un élément élastique (12a ; 12b) dans un état monté, et dans lequel l'au moins une unité formant fourreau (18a ; 18b) présente au moins un boîtier de fourreau (20a ; 20b) et au moins un élément de pression logé de façon mobile (22a ; 22b), dans lequel l'au moins un boîtier de fourreau (20a ; 20b) et l'au moins un élément de pression (22a ; 22b) sont, dans un état monté, reliés par complémentarité de formes dans au moins une direction parallèle à une force de pression, **caractérisé en ce que** l'au moins un élément de pression (22a ; 22b) est formé de façon au moins en partie conique.

2. Dispositif de champ de cuisson selon la revendication 1, **caractérisé en ce que** l'au moins un élément élastique (12a ; 12b) est formé sous la forme d'un ressort.

3. Dispositif de champ de cuisson selon la revendication 1 ou 2, **caractérisé en ce que** l'au moins un boîtier de fourreau (20a ; 20b) entoure au moins partiellement l'au moins un élément élastique (12a ; 12b) à l'état monté, au moins dans le sens circonférentiel.

4. Dispositif de champ de cuisson selon l'une des revendications précédentes, **caractérisé en ce que** l'au moins un boîtier de fourreau (20a ; 20b) entoure au moins partiellement l'au moins un élément de pression (22a ; 22b) à l'état monté, au moins dans le sens circonférentiel.

5. Dispositif de champ de cuisson selon l'une des revendications précédentes, **caractérisé en ce que** l'au moins un élément élastique (12a ; 12b) entoure au moins partiellement l'au moins un élément de pression (22a ; 22b) à l'état monté.

6. Dispositif de champ de cuisson selon l'une des revendications précédentes, **caractérisé en ce que** l'au moins un boîtier de fourreau (20a) et l'au moins un élément de pression (22a) sont reliés l'un à l'autre au moins via une liaison par encliquètement à l'état monté.

7. Dispositif de champ de cuisson selon l'une des revendications précédentes, **caractérisé en ce que** l'au moins un boîtier de fourreau (20b) et l'au moins un élément de pression (22b) sont reliés l'un à l'autre au moins via une liaison à baïonnette à l'état monté.

8. Champ de cuisson (24a ; 24b), en particulier champ de cuisson à induction, avec au moins un dispositif de champ de cuisson selon l'une des revendications 1 à 7.
